Europäisches Patentamt

European Patent Office

Office européen des brevets

(19)

(11) Veröffentlichungsnummer : **0 474 041 B1**

## (12) EUROPÄISCHE PATENTSCHRIFT

(45) Veröffentlichungstag der Patentschrift :
**27.07.94 Patentblatt 94/30**

(51) Int. Cl.$^5$ : **C08G 18/67, C08G 18/73, C09D 175/16**

(21) Anmeldenummer : **91114032.5**

(22) Anmeldetag : **22.08.91**

(54) **Acryloylgruppen enthaltende, aliphatische Polyurethane, ein Verfahren zu ihrer Herstellung und ihre Verwendung.**

(30) Priorität : **04.09.90 DE 4027971**

(43) Veröffentlichungstag der Anmeldung :
**11.03.92 Patentblatt 92/11**

(45) Bekanntmachung des Hinweises auf die
Patenterteilung :
**27.07.94 Patentblatt 94/30**

(84) Benannte Vertragsstaaten :
**AT BE CH DE ES FR GB IT LI NL SE**

(56) Entgegenhaltungen :
**EP-A- 0 005 750**
**EP-A- 0 122 611**

(56) Entgegenhaltungen :
**EP-A- 0 153 520**
**EP-A- 0 168 173**
**EP-A- 0 290 623**
**GB-A- 2 085 023**

(73) Patentinhaber : **BAYER AG**
**D-51368 Leverkusen (DE)**

(72) Erfinder : **Meixner, Jürgen, Dr.**
**Joseph-Brocker-Dyk 56**
**W-4150 Krefeld (DE)**
Erfinder : **Fischer, Wolfgang, Dr.**
**Eschendonk 6**
**W-4005 Meerbusch 3 (DE)**
Erfinder : **Noll, Klaus, Dr.**
**Morgengraben 6**
**W-5000 Köln 80 (DE)**

## Beschreibung

Die vorliegende Erfindung betrifft neue Acryloylgruppen enthaltende Polyurethane, die durch Strahlenhärtung in vernetzte Produkte überführt werden können, ein Verfahren zu ihrer Herstellung und ihre Verwendung als Bindemittel für Überzugsmassen.

Acryloylgruppen enthaltende Polyurethane, die, wie beispielsweise in der DE-OS 1 644 798, DE-OS 2 115 373, DE-OS 2 737 406, EP-A-0 005 750, EP-A-0 122 611, EP-A-0 153 520, EP-A-0 168 173, EP-A-0 290 623 oder GB-A-2 085 023 beschrieben, als Umsetzungsprodukt von u.a. Polyisocyanaten und Hydroxyalkylacrylaten erhalten werden, sind seit langem bekannt. Sie werden mit Hilfe von energiereichen Strahlen wie UV- oder Elektronenstrahlen gehärtet und dienen zum Beschichten von z.B. Holz oder zur Herstellung von Überzügen zu graphischen Zwecken.

Diese sogenannten Urethanacrylate sind hochviskos. Um ihre Viskosität zu senken, werden zu ihrer Herstellung oft außer Hydroxyalkylacrylate noch Polyetheralkohole verwendet. Auch wenn nur (cyclo)aliphatische Polyisocyanate eingesetzt werden, ergeben sich dabei jedoch Produkte, die nicht wetterstabil sind.

Die der Erfindung zugrundeliegende Aufgabe bestand deshalb darin, solche Acryloylgruppen enthaltende aliphatische Polyurethane zur Verfügung zu stellen, die für eine Verarbeitung als Lackbindemittel geeignete Viskositäten besitzen, ohne daß Ethergruppierungen aufweisendeVerbindungen zum Aufbau verwendet werden müssen. Gleichzeitig sollten sie sich durch eine hohe Reaktivität unter UV-Bestrahlung auszeichnen.

Diese Aufgabe konnte durch die Bereitstellung der nachstehend näher beschriebenen erfindungsgemäßen Acryloylgruppen enthaltenden, aliphatischen Polyurethane gelöst werden.

Gegenstand der Erfindung sind somit Acryloylgruppen enthaltende aliphatische Polyurethane, die in 80 gew.-%iger Lösung in n-Butylacetat eine Viskosität bei 23° C von 1000 bis 300.000 mPa.s aufweisen, und die durch Umsetzung von

a) 1,0 Mol einer Polyisocyanatkomponente mit

b) 0,7 bis 1,5 Mol einer Acryloylgruppen aufweisenden Alkoholkomponente, bestehend aus mindestens einem Acryloylgruppen aufweisenden einwertigen Alkohol des Molekulargewichtsbereichs 116 bis 300, und

c) 0,2 bis 0,6 Mol einer Polyolkomponente

unter Einhaltung eines NCO/OH-Äquivalentverhältnisses, bezogen auf alle Ausgangskomponenten a) bis c), von 0,5:1 bis 1:1 hergestellt worden sind, dadurch gekennzeichnet, daß die Komponente a) zumindest zu 50 NCO-Äquivalent-% aus 1,6-Diisocyanato-2,2,4-trimethylhexan und/oder 1,6-Diisocyanato-2,4,4-trimethylhexan und die Komponente c) aus mindestens einem mindestens dreiwertigen Alkohol des Molekulargewichtsbereichs 92 bis 200, gegebenenfalls im Gemisch mit bis zu 50 Hydroxyläquivalent-% der Komponente c) Ethylenglykol, Thiodiglykol oder Hexandiol bestehen.

Gegenstand der Erfindung ist auch ein Verfahren zur Herstellung von derartigen Polyurethanen durch Umsetzung von

a) einer Polyisocyanatkomponente mit

b) 0,7 bis 1,5 Mol einer Acryloylgruppen aufweisenden Alkoholkomponente, bestehend aus mindestens einem Acryloylgruppen aufweisenden einwertigen Alkohol des Molekulargewichtsbereichs 116 bis 300, und

c) 0,2 bis 0,6 Mol einer Polyolkomponente

unter Einhaltung eines NCO/OH-Äquivalentverhältnisses, bezogen auf alle Ausgangskomponenten a) bis c), von 0,5 : 1 bis 1 : 1, dadurch gekennzeichnet, daß die Komponente a) zumindest zu 50 NCO-Äquivalent-% aus 1,6-Diisocyanato-2,2,4-trimethylhexan und/oder 1,6-Diisocyanato-2,4,4-trimethylhexan und die Komponente c) aus mindestens einem mindestens dreiwertigen Alkohol des Molekulargewichtsbereichs 92 bis 200, gegebenenfalls im Gemisch mit bis zu 50 Hydroxyläquivalent-% der Komponente c) an Ethylenglykol, Thiodiglykol oder Hexandiol bestehen.

Gegenstand der Erfindung ist schließlich auch die Verwendung dieser Polyurethane als Bindemittel für Überzugsmassen.

Die Polyisocyanatkomponente a) besteht zumindest zu 50, vorzugsweise zu mindest zu 70 und besonders bevorzugt zu 100 NCO-Äquivalent-% aus 1,6-Diisocyanato-2,2,4-trimethylhexan und/oder 1,6-Diisocyanato-2,4,4-trimethylhexan. Im allgemeinen handelt es sich bei dieser Diisocyanat-Komponente um ein technisches Gemisch, das im wesentlichen zu gleichen Gewichtsteilen aus den beiden Isomeren besteht.

Die Polyisocyanatkomponente a) kann, den gemachten Ausführungen entsprechend, auch bis zu 50 NCO-Äquivalent-%, vorzugsweise bis zu 30 NCO-Äquivalent-% an anderen Polyisocyanaten mit aliphatisch und/oder cycloaliphatisch gebundenen Isocyanatgruppen enthalten. Bei diesen anderen Polyisocyanaten handelt es sich beispielsweise um 1,6-Diisocyanatohexan, 1-Isocyanato-3,3,5-trimethyl-5-isocyanatomethyl-cyclohexan (IPDI), Isocyanuratgruppen aufweisende Polyisocyanate auf Basis von IPDI oder 1,6-Diisocyanatohexan oder

EP 0 474 041 B1

Urethangruppen aufweisende Polyisocyanate auf Basis von IPDI oder 1,6-Diisocyanatohexan und mehrwertigen Alkoholen wie beispielsweise Trimethylolpropan und/oder Propylenglykol.

Bei der Komponente b) handelt es sich um Acryloylgruppen aufweisende einwertige Alkohole bzw. um beliebige Gemische derartiger Alkohole. Hierunter sind pro Molekül eine freie Hydroxylgruppen aufweisende Ester der Acrylsäure mit mehrwertigen Alkoholen zu verstehen. Die Ester weisen ein Molekulargewicht von 116 bis 300, vorzugsweise 116 bis 230, auf. Beispiele für solche ethylenisch ungesättigte Ester sind 2-Hydroxyethylacrylat, 1-Methyl-2-hydroxyethylacrylat, 2- und 3-Hydroxypropylacrylat, 2-, 3- und 4-Hydroxybutylacrylat. Ebenfalls in Betracht kommen beispielsweise die Anlagerungsprodukte von 1 Mol ε-Caprolacton an 1 Mol Hydroxyalkylester der zuletzt beispielhaft genannten Art.

Die Polyolkomponente c) besteht aus mindestens einem dreiwertigen Alkohol des Molekulargewichtsbereichs 92 bis 200 wie beispielsweise Glycerin, Trimethylolpropan, Pentaerythrit und/oder Sorbit. Es ist auch möglich, kleinere Mengen an Ethylenglykol, Thiodiglykol oder Hexandiol mitzuverwenden. Die Mitverwendung derartiger Diole ist jedoch allenfalls in Mengen bis zu ca. 50 Hydroxyläquivalent % der Komponente c) möglich.

Die Herstellung der Polyurethane durch Umsetzung der genannten Ausgangskomponenten kann in Substanz oder in gegenüber Isocyanaten inerten Lösungsmitteln, wie beispielsweise Aceton, Ethylacetat, Butylacetat, niedermolekularen Estern der (Meth)Acrylsäure oder Gemischen derartiger Lösungsmittel erfolgen, wobei vorzugsweise Reaktionstemperaturen von 20 bis 100°C, insbesondere 40 bis 80°C eingehalten werden. Die Umsetzung geschieht vorzugsweise in einer Eintopfreaktion, wobei entweder so vorgegangen werden kann, daß die Polyisocyanatkomponente a) vorgelegt wird und die Komponenten b) und c) nacheinander zugegeben werden oder aber daß die Komponenten b) und c) vorgelegt werden und die Polyisocyanatkomponente a) zugegeben wird. In jedem Fall wird die Umsetzung, bei der ein NCO/OH-Äquivalentverhältnis von 0,5:1 bis 1:1 vorliegt, unter milden Bedingungen, z.B. innerhalb des obengenannten Temperaturbereich, solange durchgeführt, bis der NCO-Gehalt auf unter 0,1 Gew.-% abgefallen ist.

Die zum Polyurethan führende Additionsreaktion kann in an sich bekannter Weise mittels geeigneter Katalysatoren, wie beispielsweise Zinnoctoat, Dibutylzinndilaurat oder tertiären Aminen wie Dimethylbenzylamin beschleunigt werden. Das als Umsetzungsprodukt anfallende Urethanacrylat kann andererseits durch Zugabe geeigneter Inhibitoren und Antioxidantien wie beispielsweise Phenole und/oder Hydrochinone, in Mengen von jeweils 0,001 bis 0,3 Gew.-%, bezogen auf Urethanacrylat, vor vorzeitiger und unerwünschter Polymerisation geschützt werden. Der Zusatz dieser Hilfsmittel kann vor, gleichzeitig oder im Anschluß an die Umsetzung erfolgen.

Die erfindungsgemäßen Produkte stellen klare, farblose Flüssigkeiten dar, die als 80 gew.-%ige Lösung in Butylacetat vorzugsweise bei 23°C eine Viskosität von 5000 bis 150.000 mPa.s aufweisen. Die unter erfindungsgemäßer Verwendung der erfindungsgemäßen Produkte hergestellten Lacke können die an sich bekannten Hilfs- und Zusatzmittel der Lacktechnologie enthalten.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Die Acryloylgruppen aufweisenden Polyurethane können auch in an sich bekannten Lacklösungsmitteln gelöst, mit copolymerisierbaren Monomeren abgemischt oder in Wasser emulgiert zum Einsatz gelangen.

Geeignete Lösungsmittel sind beispielsweise Butylacetat, Cyclohexan, Aceton, Toluol oder Gemische derartiger Lösungsmittel.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzu gehören beispielsweise 1,6-Hexandioldiacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der Acryloylgruppen aufweisenden Polyurethane eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Falls die Acryloylgruppen aufweisenden Polyurethane aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfolgen.

Hierfür geeignete Emulgatoren sind bekannt und z.B. in Ullmanns Encyclopädie der technischen Chemie, Bd. 10, 4. Auflage, Kap. Emulsionen, S. 449 ff. beschrieben.

Bevorzugte Emulgatoren sind copolymerisierbare Acryloylgruppen enthaltende Polyurethanemulgatoren, wie sie in der DE-OS 30 00 257 beschrieben sind.

Die wäßrigen Emulsionen enthalten im allgemeinen 10 bis 70 Gew.-%, vorzugsweise 30 bis 70 Gew.-% der erfindungswesentlichen Acryloylgruppen aufweisenden Polyurethane. Die Herstellung der Emulsionen kann durch Einrühren von Wasser in das Gemisch aus erfindungsgemäßem Polyurethanacrylat und Emulgator

3

z.B. durch einfaches Rühren oder mittels Dissolver erfolgen.

Zur Ausbildung einer feinteiligen Emulsion, d.h. zur besseren Einbringung der Scherkräfte ist portionsweiser Wasserzusatz bei Temperaturen unter 30°C vorteilhaft. Bei optimaler Scherung werden Öl-in-Wasser-Emulsionen gebildet.

Die Aushärtung der die erfindungsgemäßen Bindemittel enthaltenden Überzugsmassen, d.h. Lacke erfolgt, gegebenenfalls nach Verdunsten von flüchtigen Hilfsmitteln wie inerte Lösungsmittel oder Wasser, stets mittels energiereicher Strahlung, wie UV-Licht, Elektronen- oder Gammastrahlen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Korsar, Light-Sensitive Systems, J. Wiley & Sons, New York - London - Sydney 1965, beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-methylphenylpropan-1-on.

Die erwähnten Fotoinitiatoren, die je nach Verwendungszweck der erfindungsgemäßen Masse in Mengen zwischen 0,1 und 10 Gew.-%, vorzugsweise 0,1 bis 5 Gew.-%, bezogen auf das Gewicht der Reaktionsprodukte, eingesetzt werden, können als einzelne Substanz oder, wegen häufiger vorteilhafter synergistischer Effekte, auch in Kombination miteinander verwendet werden.

Die nach den üblichen Methoden der Beschichtungstechnologie verarbeitbaren, erfindungsgemäßen Polyurethane als Bindemittel enthaltenden Überzugsmassen bzw. Lacke eignen sich zur Beschichtung der unterschiedlichsten Substrate wie z.B. Papier, Kartonage, Leder, Holz, Kunststoffe, Vlies, Textilien, keramische Materialien, mineralische Materialien, Glas, Metall, Kunstleder oder fotografische Materialien wie z.B. mit fotografischer Schicht versehenes Papier.

In den nachfolgenden Beispielen beziehen sich alle Prozentangaben auf Gewichtsprozente.

Beispiele

Die in Tabelle 1 genannte Menge an Komponente a) wird zusammen mit 0,2 % Zinndioctoat und 0,1 % 2,6-Di-t.butyl-p.-kresol in Butylacetat gelöst, wobei die Menge des Lösungsmittels so gewählt wird, daß letztendlich eine 80 Gew.-%ige Lösung des resultierenden Polyurethans vorliegt. Die resultierende Lösung wird unter Durchleiten von Luft auf 50°C erwärmt, dann wird die in Tabelle 1 genannte Menge an Komponente b), schließlich die genannte Menge an Komponente c) zugetropft. Hierbei wird, gegebenenfalls durch externes Kühlen, die Reaktionstemperatur bei maximal 60°C gehalten. Anschließend wird die Mischung bei 60°C solange gehalten, bis der NCO-Gehalt auf kleiner 0,1 % gefallen ist.

<u>Tabelle 1</u>

| Einwaage (Mol) | Beispiele | | | | Vergleichsbeispiel | | |
|---|---|---|---|---|---|---|---|
| | 1 | 2 | 3 | 4 | 5 | 6 | 7 |
| <u>Komponente a)</u> | | | | | | | |
| Trimethyl-1,6-diisocyanato-hexan (Gemisch 2,2,4- und 2,4,4-Trimethyl, je 50 %) | 1,0 | 1,0 | 1,0 | 1,0 | - | - | 1,0 |
| 1,6-Diisocynatohexan | - | - | - | - | 1,0 | - | - |
| Isophorondiisocyanat | - | - | - | - | - | 1,0 | - |
| <u>Komponente b)</u> | | | | | | | |
| Hydroxyethylacrylat | 1,0 | - | 0,8 | 1,0 | 1,0 | - | 1,0 |
| 4-Hydroxybutylacrylat | - | 1,0 | - | - | - | 1,0 | 2,0 |
| <u>Komponente c)</u> | | | | | | | |
| Trimethylolpropan | 0,33 | 0,33 | 0,34 | - | 0,33 | 0,33 | - |
| Thiodiglykol | - | - | 0,13 | - | - | - | - |
| Pentaerythrit | - | - | - | 0,25 | - | - | - |
| Viskosität (23°C, mPa.s) | 35500 | 5700 | 25500 | 97600 | krist. nicht meßbar (pastös) | | 160 |

<u>Verwendungsbeispiele</u>

Das Produkt aus Vergleichsbeispiel 5 konnte nicht eingesetzt werden, da es wegen Kristallinität nicht applizierbar war. Zur besseren Übersichtlichkeit entspricht die nachstehende Numerierung der Verwendungs-

5

beispiele der vorstehenden Numerierung der Herstellungsbeispiele.

Die Produkte der erfindungsgemäßen Beispiele und der Vergleichsbeispiels 6 und 7 werden mit Butylacetat auf eine Verarbeitungsviskosität von ca. 50 Sekunden (Auslaufgeschwindigkeit, DIN-Becher 4 mm, 23°C) eingestellt und mit jeweils 5 % Benzophenon ( auf 100 %iges Urethanacrylat berechnet versetzt. Nach Auftragen der Lackfilme auf Karton (10 µm Auftragsstärke) werden diese unter einem Hanoviastrahler (80 W/cm, 10 cm Abstand) durchbewegt. Der in Tabelle 2 für die Reaktivität angegebene Wert gibt die Bandgeschwindigkeit an, bei der ein lösemittel- und kratzfester Überzug erzielt wurde.

"Lösemittelfest" bedeutet in diesem Fall, daß der Lackfilm nach mindestens 20 Doppelhüben mit einem in Butylacetat getränkten Tuch noch einwandfrei aussieht.

## Tabelle 2

|  | Beispiele | | | | Vergleichsbeispiel | |
|---|---|---|---|---|---|---|
|  | 1 | 2 | 3 | 4 | 6 | 7 |
| Reaktivität (m/min) | 35 | 20 | 20 | 30 | < 10 | < 10 |

## Patentansprüche

1. Acryloylgruppen enthaltende aliphatische Polyurethane, die in 80 gew.-%iger Lösung in n-Butylacetat eine Viskosität bei 23°C von 1000 bis 300.000 mPa.s aufweisen, und die durch Umsetzung von

   a) 1,0 Mol einer Polyisocyanatkomponente mit

   b) 0,7 bis 1,5 Mol einer Acryloylgruppen aufweisenden Alkoholkomponente, bestehend aus mindestens einem Acryloylgruppen aufweisenden einwertigen Alkohol des Molekulargewichtsbereichs 116 bis 300, und

   c) 0,2 bis 0,6 Mol einer Polyolkomponente

   unter Einhaltung eines NCO/OH-Äquivalentverhältnisses, bezogen auf alle Ausgangskomponenten a) bis c), von 0,5:1 bis 1:1 hergestellt worden sind, dadurch gekennzeichnet, daß die Komponente a) zumindest zu 50 NCO-Äquivalent-% aus 1,6-Diisocyanato-2,2,4-trimethylhexan und/oder 1,6-Diisocyanato-2,4,4-trimethylhexan und die Komponente c) aus mindestens einem mindestens dreiwertigen Alkohol des Molekulargewichtsbereichs 92 bis 200, gegebenenfalls im Gemisch mit bis zu 50 Hydroxyläquivalent-% der Komponente c) Ethylenglykol, Thiodiglykol oder Hexandiol bestehen.

2. Verfahren zur Herstellung von Polyurethan gemäß Anspruch 1, durch Umsetzung

   a) einer Polyisocyanatkomponente mit

   b) 0,7 bis 1,5 Mol einer Acryloylgruppen aufweisenden Alkoholkomponente, bestehend aus mindestens einem Acryloylgruppen aufweisenden einwertigen Alkohol des Molekulargewichtsbereichs 116 bis 300, und

   c) 0,2 bis 0,6 Mol einer Polyolkomponente

   unter Einhaltung eines NCO/OH-Äquivalentverhältnisses, bezogen auf alle Ausgangskomponenten a) bis c), von 0,5 : 1 bis 1 : 1, dadurch gekennzeichnet, daß die Komponente a) zumindest zu 50 NCO-Äquivalent-% aus 1,6-Diisocyanato-2,2,4-trimethylhexan und/oder 1,6-Diisocyanato-2,4,4-trimethylhexan und die Komponente c) aus mindestens einem mindestens dreiwertigen Alkohol des Molekulargewichtsbereichs 92 bis 200, gegebenenfalls im Gemisch mit bis zu 50 Hydroxyläquivalent-% der Komponente c) an Ethylenglykol, Thiodiglykol oder Hexandiol bestehen.

3. Verwendung der Polyurethane gemäß Anspruch 1 als Bindemittel für Überzugsmassen.

## Claims

1. Acryloyl-functional aliphatic polyurethanes which have a viscosity in the form of an 80% by weight solu-

6

tion in n-butyl acetate at 23°C of 1,000 to 300,000 mPa.s and which have been produced by reaction of
a) 1.0 mole of a polyisocyanate component with
b) 0.7 to 1.5 moles of an acryloyl-functional alcohol component consisting of at least one acryloyl-functional monohydric alcohol with a molecular weight of 116 to 300 and
c) 0.2 to 0.6 mole of a polyol component,
an NCO/OH equivalent ratio based on all the starting components a) to c) of 0.5:1 to 1:1 being maintained during the reaction,
characterized in that at least 50 NCO equivalent-% of component a) consists of 1,6-diisocyanato-2,2,4-trimethylhexane and/or 1,6-diisocyanato-2,4,4-trimethylhexane while component c) consists of an at least trihydric alcohol with a molecular weight of 92 to 200, optionally in admixture with up to 50 hydroxyl equivalent-% of component c) of ethylene glycol, thiodiglycol or hexanediol.

2. A process for the production of the polyurethane claimed in claim 1 by reaction of
a) a polyisocyanate component with
b) 0.7 to 1.5 moles of an acryloyl-functional alcohol component consisting of at least one acryloyl-functional monohydric alcohol with a molecular weight of 116 to 300 and
c) 0.2 to 0.6 mole of a polyol component,
an NCO/OH equivalent ratio based on all the starting components a) to c) of 0.5:1 to 1:1 being maintained during the reaction,
characterized in that at least 50 NCO equivalent-% of component a) consists of 1,6-diisocyanato-2,2,4-trimethylhexane and/or 1,6-diisocyanato-2,4,4-trimethylhexane while component c) consists of an at least trihydric alcohol with a molecular weight of 92 to 200, optionally in admixture with up to 50 hydroxyl equivalent-% of component c) of ethylene glycol, thiodiglycol or hexanediol.

3. The use of the polyurethanes claimed in claim 1 as a binder for coating compounds.

**Revendications**

1. Polyuréthannes aliphatiques contenant des groupes acryloyle et ayant une viscosité à 23°C de 1 000 à 300 000 mPa.s à l'état de solution à 80 % en poids dans l'acétate de n-butyle, et qui ont été préparés par réaction de
a) 1,0 mol d'un composant polyisocyanate avec
b) 0,7 à 1,5 mol d'un composant alcool contenant des groupes acryloyle et consistant en un alcool monovalent contenant au moins un groupe acryloyle et ayant un poids moléculaire de 116 à 300, et
c) 0,2 à 0,6 mol d'un composant polyol,
à un rapport de 0,5: 1 à 1: 1 entre les équivalents de NCO/OH sur tous les composants de départ a) à c),
caractérisés en ce que le composant a) consiste pour au moins 50 équivalents de NCO % en le 1,6-diisocyanato-2,2,4-triméthylhexane et/ou le 1,6-diisocyanato-2,4,4-triméthylhexane et le composant c) consiste en au moins un alcool au moins trivalent de poids moléculaire 92 à 200, éventuellement en mélange avec jusqu'à 50 équivalents de groupes hydroxy % du composant c), d'éthylèneglycol, de thiodiglycol ou d'hexanediol.

2. Procédé de préparation des polyuréthannes selon revendication 1, par réaction de
a) un composant polyisocyanate avec
b) 0,7 à 1,5 mol d'un composant alcool contenant des groupes acryloyle et consistant en un alcool monovalent contenant au moins un groupe acryloyle, de poids moléculaire 116 à 300, et
c) 0,2 à 0,6 mol d'un composant polyol,
à un rapport de 0,5 : 1 à 1 : 1 entre les équivalents de groupes NCO/OH sur tous les composants de départ a) à c),
caractérisé en ce que le composant a) consiste pour au moins 50 équivalents de NCO % en le 1,6-diisocyanato-2,2,4-triméthylhexane et/ou le 1,6-diisocyanato-2,4,4-triméthylhexane et le composant c) consiste en au moins un alcool au moins trivalent de poids moléculaire 92 à 200, éventuellement en mélange avec 50 équivalents de groupes hydroxy % du composant c), d'éthylèneglycol, de thiodiglycol ou d'hexanediol.

3. Utilisation des polyuréthannes selon revendication 1 en tant que liants pour masses de revêtement.